# EUROPEAN PATENT APPLICATION

(11) **EP 4 607 610 A1**
(43) Date of publication of application: **27.08.2025**
(21) Application number: 23942605.9
(22) Date of filing: 26.12.2023
(51) Int. Cl.: H01M 4/36, H01M 4/58, H01M 4/583, H01M 4/02, H01M 4/04

(54) **POSITIVE ELECTRODE MATERIAL HAVING OLIVINE STRUCTURE, PREPARATION METHOD THEREFOR, AND LITHIUM ION BATTERY**

(71) Applicant: Beijing Easpring Material Technology Co., Ltd., Beijing 100160 (CN)
(72) Inventor: WANG, Youqiang, Beijing 100160 (CN); FU, Haikuan, Beijing 100160 (CN); ZHANG, Xuequan, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2023/141885
(87) International publication number: WO 2025/137857

(57) **Abstract**

The present application relates to the technical field of lithium-ion batteries, and particularly, to an olivine-type cathode material, a method thereof, and a lithium-ion battery. The cathode material includes a matrix and a carbon coating layer. In a Raman spectrum, the cathode material has Raman responses in wavenumber regions of 940 cm⁻¹ to 950 cm⁻¹, 1330 cm⁻¹ to 1350 cm⁻¹, and 1580 cm⁻¹ to 1610 cm⁻¹, corresponding to three characteristic peaks A, B, and C, respectively. The cathode material satisfies: 0.01≤an average of [I(A)/I(C)]≤0.3 and 0.01≤an average of [I(A)/I(B)]≤0.3. The cathode material according to the present disclosure has a uniform carbon coating, and thus the cathode material has a high stability, a low specific surface area, a low volume resistivity, and a high pallet density. At the same time, when the cathode material is applied in a lithium-ion battery, the lithium-ion battery has excellent electrochemical performances.

## Description

### FIELD

The present disclosure relates to the technical field of lithium-ion batteries, and particularly, to an olivine-type cathode material, a method for preparing an olivine-type cathode material, and a lithium-ion battery including an olivine-type cathode material.

### BACKGROUND

Lithium-ion batteries have been widely used in new energy vehicles, mobile electronic devices, new power batteries, and energy storage fields due to their advantages such as long cycle life, high energy density, and no memory effect. A cathode material serves as a key component of the lithium-ion battery, and electrochemical performance of the cathode material is critical for comprehensive indicators of the lithium-ion battery.

Olivine-type cathode materials (LiMePO₄, Me=Fe, Mn; FeₓMn₍₁₋ₓ₎) have characteristics of low cost, long cycle life, high safety performance and environmental friendliness, and have been widely used in fields of power and energy storage. However, the olivine-type cathode materials, due to their intrinsic properties, exhibit low electronic conductivity (LiFePO₄=1.8×10⁻⁸S/cm, LiMnPO₄<10⁻¹⁰S/cm) and a low Li⁺ diffusion coefficient (LiFePO₄≈10⁻¹¹cm²/s, LiMnPO₄≈10⁻¹⁴cm²/s). In view of the above problems, researchers mainly control a primary particle diameter, a surface carbon coating, and elemental doping of the cathode material for optimization.

CN115863596A discloses a cyclic carbon compound with flexibility and high specific surface area, which is conducive to close contact with lithium manganese iron phosphate, improves uniformity of a carbon layer, and forms a continuously electrically conductive network. In this way, a lithium manganese iron phosphate composite material can be improved in terms of conductivity and stability. During a preparation of the cyclic carbon compound, such a technique requires a long preparation period, washing with a large amount of purified water, and volatilization of toxic gas such as methanol.

In the related art described above, in the olivine-type cathode material coated with carbon, a graphitization degree of the carbon coating is typically characterized by I_{D}/I_{G}. However, a treatment temperature of the olivine structure cathode material is relatively low (generally lower than 900°C). During formation of an inorganic carbon coating layer from an organic carbon source, carbon atoms transition from sp³ hybridization into sp² hybridization with the increase in the graphitization degree, and the I_{D}/I_{G} provides a relatively single performance characterization effect on the cathode material. At the same time, a thickness of the carbon coating layer and carbon formation quality can both affect an energy retention rate of the olivine structure during the cycle.

### SUMMARY

In order to overcome the above-mentioned technical problems, objects of the present disclosure are to provide an olivine-type cathode material, a preparation method thereof, and a lithium-ion battery. The cathode material has characteristics of uniform carbon coating. Thus, the cathode material has a high stability, a low specific surface area, a low volume resistivity, and a high pallet density. When the cathode material is applied in lithium-ion batteries, the lithium-ion batteries can have excellent electrochemical performances, especially having an improved energy retention rate during cycle.

In order to achieve the above objects, a first aspect of the present disclosure provides an olivine-type cathode material. The cathode material includes a matrix and a carbon coating layer. In a Raman spectrum, the cathode material has Raman responses in wavenumber regions of 940 cm⁻¹ to 950 cm⁻¹, 1330 cm⁻¹ to 1350 cm⁻¹, and 1580 cm⁻¹ to 1610 cm⁻¹, corresponding to three characteristic peaks A, B, and C, respectively. The cathode material satisfies: 0.01≤an average of [I(A)/I(C)]≤0.3 and 0.01≤an average of [I(A)/I(B)]≤0.3.

In the present disclosure, unless otherwise specified, the olivine-type cathode material is also referred to as a cathode material.

The cathode material according to the present disclosure exhibits the Raman responses within the specific wavenumber regions, and the intensity ratio of the characteristic peaks are within the specific ranges, i.e., 0.01≤the average of [I(A)/I(C)]≤0.3 and 0.01≤the average of [I(A)/I(B)]≤0.3, and a standard deviation of [I(A)/I(C)]≤0.02 and a standard deviation of [I(A)/I(B)]≤0.02 are especially further limited. These indicate that the carbon coating of the cathode material has good overall uniformity and an appropriate thickness, and contents of disordered carbon and ordered carbon in the carbon coating layer are within an appropriate range, which has high compatibility with the matrix. Under a condition of the same content of the carbon coating layer, the uniform carbon coating layer in the present disclosure can effectively reduce the specific surface area and a powder impedance of the cathode material.

A second aspect of the present disclosure provides a method for preparing an olivine-type cathode material. The method includes: mixing a Mn source, a Fe source, a M source, a phosphorus source, a Li source, an organic carbon source, and water, to obtain a mixed slurry; and sequentially performing grinding, spray drying, and sintering on the obtained mixed slurry to load a carbon coating layer on a surface of the matrix, to obtain the cathode material. Said sintering is performed in an inert atmosphere. A particle size D₅₀ of said grinding is controlled to satisfy: 0.1 µm≤D₅₀≤0.48 µm, and preferably, 0.15 µm≤D₅₀≤0.36 µm. The matrix having a composition represented by Formula I:

LiₐMn₁₋ₓFeₓM_{b}(PO₄)_{c} (I),

where:
M is selected from at least one of Ti, Mg, V, W, Nb, La, Cr, Mo, Ca, Zn, Y, Zr, Sm, Co, Ni, B, Cu, and Gd; 0.95≤a≤1.1; 0≤x≤1; 0≤b≤0.2; and 1≤c≤1.1.

A third aspect of the present disclosure provides a lithium-ion battery. The lithium-ion battery includes the cathode material according to the first aspect of the present disclosure, or a cathode material prepared by the method according to the second aspect of the present disclosure.

The present disclosure has the following advantages over the related art.
(1) For the cathode material according to the present disclosure, the average and the standard deviation of each of [I(A)/I(C)] and [I(A)/I(B)] are both within the appropriate ranges, indicating that the overall carbon coating on a surface of the cathode material is uniform and has an appropriate thickness, the carbon coating layer has a high graphitization degree and is highly compatible with the matrix. Under the condition of the same content of the carbon coating layer, the carbon coating layer in the present disclosure can effectively reduce the specific surface area and the volume resistivity of the cathode material.
(2) In the preparation method according to the present disclosure, based on solid phase process, an olivine-type cathode material uniformly coated with carbon is prepared by controlling the particle size range for said grinding, and particularly by regulating a spray drying particle size, a sintering temperature, and organic carbon source types, which may affect the content of the carbon coating and a coating effect to a certain extent. At the same time, in the preparation method, an addition of the organic carbon source is further regulated based on presence of and addition types of the main metallic elements (Mn and Fe) other than Li in the cathode material, to obtain the cathode material uniformly coated with carbon.
(3) The cathode material according to the present disclosure, when applied in a lithium-ion battery, can effectively improve the electrochemical performances of the lithium-ion battery, especially the energy retention rate. At the same time, according to the present disclosure, different carbon formation characteristics are provided, enabling the olivine-type cathode material to have different features in Raman characteristics, which are reflected by capacity retention of the lithium-ion battery. Thus, the preparation and process monitoring of the cathode material can be well guided.

### BRIEF DESCRIPTION OF THE DRAWINGS

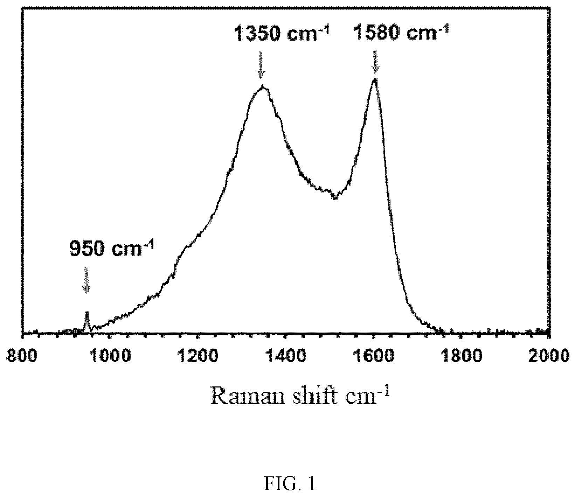

FIG. 1 is a schematic diagram of a Raman spectrum of a cathode material S1 prepared in Example 1.

### DETAILED DESCRIPTION

Endpoint values or any values of ranges disclosed in the present disclosure are not limited to the precise ranges or values. These ranges or values should be understood to include values close to these ranges or values. For numerical ranges, one or more new numerical ranges can be obtained by combining point values within the respective ranges, an endpoint value and an individual point value within the respective ranges, and individual point values within the respective ranges, and these numerical ranges should be regarded as specifically disclosed in the present disclosure.

In the present disclosure, unless otherwise specified, "first", "second", and "third" neither indicate a sequence nor impose a limitation on various materials or steps, and they are only used to distinguish or indicate different materials or steps. For example, terms "first", "second", and "third" in "first slurry", "second slurry" and "third slurry" are only used to indicate that they are different slurries. Similarly, terms "first", "second", and "third" in "first sintering", "second sintering", and "third sintering" are only used to indicate that they are different sintering.

A first aspect of the present disclosure provides an olivine-type cathode material. The cathode material includes a matrix and a carbon coating layer. In a Raman spectrum, the cathode material has Raman responses in wavenumber regions of 940 cm⁻¹ to 950 cm⁻¹, 1330 cm⁻¹ to 1350 cm⁻¹, and 1580 cm⁻¹ to 1610 cm⁻¹, corresponding to three characteristic peaks A, B, and C, respectively; and the cathode material satisfies: 0.01≤an average of [I(A)/I(C)]≤0.3 and 0.01≤an average of [I(A)/I(B)]≤0.3.

In the present disclosure, unless otherwise specified, the cathode material is subjected to a Raman testing, the testing conditions of which include: an excitation wavelength of 532 nm, a laser power of 0.1 mW, an objective lens magnification of 50 X, a testing region of 20 µm×30 µm, and 600 measurement points.

In the present disclosure, unless otherwise specified, I(A), I(B), and I(C) refer to intensities of the characteristic peaks A, B, and C of the cathode material in the wavenumber regions of 940 cm⁻¹ to 950 cm⁻¹, 1330 cm⁻¹ to 1350 cm⁻¹, and 1580 cm⁻¹ to 1610 cm⁻¹ in the Raman spectrum, respectively. I(A)/I(C) represents the intensity ratio of the peak A to the peak C of the cathode material in the Raman spectrum; and similarly, I(A)/I(B) represents an intensity ratio of the peak A to the peak B of the cathode material in the Raman spectrum.

In the Raman spectrum of the cathode material according to the present disclosure, the peak A in the wavenumber region of 940 cm⁻¹ to 950 cm⁻¹ is mainly attributed to PO₄³⁻ in the matrix; the peak B in the wavenumber region of 1330 cm⁻¹ to 1350 cm⁻¹ is mainly attributed to carbon D, i.e., disordered carbon in the carbon coating layer; and the peak C in the wavenumber region of 1580 cm⁻¹ to 1610 cm⁻¹ is mainly attributed to carbon G, i.e., ordered carbon/graphitized carbon in the carbon coating layer.

In the present disclosure, the average of [I(A)/I(C)] represents an average of values of I(A)/I(C) obtained at each measurement point during measurement; and the average of [I(A)/I(B)] represents an average of values of I(A)/I(B) obtained at each measurement point during the measurement.

In some embodiments of the present disclosure, the cathode material satisfies: 0.01≤ the average of [I(A)/I(C)]≤0.3, for example, the average of [I(A)/I(C)] is 0.01, 0.05, 0.06, 0.09, 0.1, 0.15, 0.2, 0.25, 0.3, or any value within a range defined by any two of these values, preferably, 0.05≤the average of[I(A)/I(C)]≤0.25, and more preferably, 0.1≤the average of [I(A)/I(C)]≤0.25; and at the same time, the cathode material satisfies: 0.01≤the average of [I(A)/I(B)]≤0.3, for example, the average of [I(A)/I(B)] is 0.01, 0.05, 0.09, 0.1, 0.15, 0.2, 0.25, 0.3, or any value within a range defined by any two of these values, preferably, 0.05≤the average of [I(A)/I(B)]≤0.25, and more preferably, 0.1<the average of [I(A)/I(B)]≤0.25.

In some embodiments of the present disclosure, preferably, the cathode material further satisfies: a standard deviation of [I(A)/I(C)]≤0.02; and preferably, the cathode material further satisfies: a standard deviation of [I(A)/I(B)]<0.02. In the present disclosure, since the standard deviations of [I(A)/I(C)] and [I(A)/I(B)] are within the above-mentioned ranges, the carbon coating layer of the cathode material has good overall uniformity, an appropriate thickness, and a high graphitization degree, and the cathode material has a low specific surface area and a small volume resistivity. In this way, the cathode material exhibits good performances.

In some embodiments of the present disclosure, preferably, the cathode material further satisfies: an average of [I(B)/I(C)]≤1; and further preferably, the average of [I(B)/I(C)]≤0.9, for example, the average of [I(B)/I(C)] is 0.7, 0.75, 0.8, 0.85, 0.9, or any value within a range defined by any two of these values. In the present disclosure, [I(B)/I(C)] of the carbon coating layer within the above specified ranges indicates the high graphitization degree of the carbon coating layer.

In some embodiments of the present disclosure, preferably, the matrix has a composition represented by Formula I: LiₐMn₁₋ₓFeₓM_{b}(PO₄)_{c} (I), where M is selected from at least one of Ti, Mg, V, W, Nb, La, Cr, Mo, Ca, Zn, Y, Zr, Sm, Co, Ni, B, Cu, and Gd; 0.95≤a≤1.1; 0≤x≤1; 0≤b≤0.2; and 1≤c≤1.1.

In the present disclosure, preferably, in Formula I, M is selected from at least one of Ti, W, Co, V, and Mg.

In the present disclosure, in Formula I, 0.95≤a≤1.1, for example, a is 0.95, 1, 1.01, 1.02, 1.03, 1.04, 1.05, 1.1, or any value within a range defined by any two of these values, and preferably, 1≤a≤1.05.

In the present disclosure, in Formula I, 0≤x≤1, for example, x is 0, 0.3, 0.4, 0.5, 0.6, 0.7, 0.8, 0.9, 1, or any value within a range defined by any two of these values, and preferably, 0.3≤x≤1.

In the present disclosure, in Formula I, 0≤b≤0.2, for example, b is 0, 0.1, 0.12, 0.15, 0.18, 0.2, or any value within a range defined by any two of these values, and preferably, 0.1≤b≤0.2.

In the present disclosure, in Formula I, 1≤c≤1.1, for example, c is 1, 1.01, 1.02, 1.03, 1.04, 1.05, 1.08, 1.1, or any value within a range defined by any two of these values, and preferably, 1≤c≤1.05.

In the present disclosure, a, x, b, c, and M in Formula I are regulated. By regulating a within a predetermined range, a proportion of Li in the cathode material can be changed, thereby affecting a capacity and a compaction level of the cathode material; by adjusting x, a voltage platform of the cathode material can be affected; by adjusting the values of b and M, electrochemical kinetics and a pallet density of the cathode material can be affected; and by adjusting c, the capacity and the pallet density of the material can be affected through changing a proportion of P in the material.

In some embodiments of the present disclosure, preferably, based on a total weight of the cathode material, a content of the carbon coating layer ranges from 0.8 wt % to 3 wt %, for example, the content of the carbon coating layer is 0.8 wt%, 1 wt%, 1.2 wt%, 1.5 wt%, 1.8 wt%, 2 wt%, 2.2 wt%, 2.5 wt%, 3 wt%, or any value within a range defined by any two of these values, and preferably, from 1 wt % to 2.5 wt %. In the present disclosure, the content of the carbon coating layer is measured by a carbon-sulfur analyzer.

In some embodiments of the present disclosure, preferably, a thickness of the carbon coating layer ranges from 1 nm to 10 nm, for example, the thickness of the carbon coating layer is 1 nm, 1.5 nm, 2 nm, 3 nm, 4 nm, 5 nm, 8 nm, 10 nm, or any value within a range defined by any two of these values, and preferably, from 1.5 nm to 5 nm. In the present disclosure, the thickness of the carbon coating layer is measured based on the Raman spectrum and Transmission Electron Microscopy (TEM) photos.

In some embodiments of the present disclosure, preferably, an average particle size of the matrix ranges from 40 nm to 290 nm, for example, the average particle size of the matrix is 40 nm, 70 nm, 90 nm, 100 nm, 150 nm, 200 nm, 230 nm, 290 nm, or any value within a range defined by any two of these values, and preferably, from 70 nm to 230 nm.

In some embodiments of the present disclosure, preferably, an average particle size of the cathode material ranges from 50 nm to 300 nm, for example, the average particle size of the cathode material is 50 nm, 80 nm, 100 nm, 120 nm, 150 nm, 180 nm, 200 nm, 240 nm, 300 nm, or any value within a range defined by any two of these values, and preferably, from 80 nm to 240 nm. In the present disclosure, the average particle size of the cathode material = the average particle size of the matrix + the thickness of the coating layer.

In some embodiments of the present disclosure, preferably, a BET surface area of the cathode material ranges from 5 m²/g to 40 m²/g, for example, the BET surface area of the cathode material is 5 m²/g, 8 m²/g, 10 m²/g, 15 m²/g, 18 m²/g, 20 m²/g, 25 m²/g, 40 m²/g, or any value within a range defined by any two of these values, and preferably, from 8 m²/g to 25 m²/g.

In some embodiments of the present disclosure, preferably, a volume resistivity of the cathode material ranges from 0 Ω·cm to 200 Ω·cm, for example, the volume resistivity of the cathode material is 0 Ω·cm, 5 Ω·cm, 10 Ω·cm, 20 Ω·cm, 30 Ω·cm, 50 Ω·cm, 60 Ω·cm, 80 Ω·cm, 100 Ω·cm, 150 Ω·cm, 200 Ω·cm, or any value within a range defined by any two of these values, and preferably, from 0 Ω·cm to 100 Ω·cm.

In some embodiments of the present disclosure, preferably, a pallet density of the cathode material ranges from 2 g/m³ to 2.7 g/m³, for example, the pallet density of the cathode material is 2 g/m³, 2.2 g/m³, 2.3 g/m³, 2.4 g/m³, 2.5 g/m³, 2.6 g/m³, 2.7 g/m³, any value within a range defined by any two of these values, and preferably, from 2.2 g/m³ to 2.6 g/m³.

In the present disclosure, unless otherwise specified, the BET surface area parameter is measured by a static adsorption method; the volume resistivity parameter is measured by a four-probe method; and the pallet density is measured by an in-situ static method.

A second aspect of the present disclosure provides a method for preparing an olivine-type cathode material according to the first aspect of the present disclosure. The method includes: mixing a Mn source, a Fe source, a M source, a phosphorus source, a Li source, an organic carbon source, and water, to obtain a mixed slurry; and sequentially performing grinding, spray drying, and sintering on the obtained mixed slurry to load a carbon coating layer on a surface of the matrix, to obtain the cathode material. Said sintering is performed in an inert atmosphere. A particle size D₅₀ of said grinding is controlled to satisfy: 0.1 µm≤D₅₀≤0.48 µm, and preferably, 0.15 µm≤D₅₀≤0.36 µm The matrix has a composition represented by Formula I:

LiₐMn₁₋ₓFeₓM_{b}(PO₄)_{c} (I),

where:
M is selected from at least one of Ti, Mg, V, W, Nb, La, Cr, Mo, Ca, Zn, Y, Zr, Sm, Co, Ni, B, Cu, and Gd; 0.95≤a≤1.1;0≤x≤1: 0<b≤0.2; and 1≤c≤1.1.

In the method according to the present disclosure, the olivine-type cathode material prepared using a solid phase coating method has an effect of high-quality carbon coating, and the cathode material has a high stability and good electrochemical performances. At the same time, the preparation method simplifies a process flow, which is conducive to the product utilization. When the cathode material is applied to a lithium-ion battery, the lithium-ion battery can effectively improve an energy retention rate during cycle.

In the present disclosure, the particle size D₅₀ of said grinding is controlled to satisfy: 0.1 µm≤D₅₀≤0.48 µm, for example, the particle size D₅₀ of said grinding is 0.1µm, 0.15 µm, 0.2 µm, 0.25 µm, 0.3 µm, 0.36 µm, 0.4 µm, 0.48 µm, or any value within a range defined by any two of these values, and preferably, 0.15 µm≤D₅₀≤0.36. In the present disclosure, by regulating the particle size D₅₀ of said grinding, a primary particle size of the cathode material can be controlled, thereby affecting the uniformity and the thickness of the carbon coating layer. As a result, the cathode material satisfies: 0.01≤the average of [I(A)/I(C)]≤0.3 and 0.01≤the average of [I(A)/I(B)]≤0.3.

In the present disclosure, unless otherwise specified, controlling the particle size D₅₀ of the grinding refers to controlling a particle size D₅₀ of a ground material to satisfy: 0.1 µm≤D₅₀≤0.48 µm, and preferably, 0.15 µm≤D₅₀≤0.36 µm; and similarly, controlling a particle size D²₅₀ of second grinding refers to controlling a particle size D²₅₀ of a second ground material; controlling a particle size D'¹₅₀ of first coarse grinding refers to controlling a particle size D'¹₅₀ of a first coarsely ground material; controlling a particle size D¹₅₀ of first fine grinding refers to controlling a particle size D¹₅₀ of a first finely ground material; controlling a particle size D"¹₅₀ of first spray drying refers to controlling a particle size D"¹₅₀ of a first spray dried material; controlling a particle size D"²₅₀ of second spray drying refers to a particle size D"²₅₀ of a second spray dried material; controlling a particle size D³₅₀ of third grinding refers to controlling a particle size D³₅₀ of a third ground material; and controlling a particle size D"³₅₀ of third spray drying refers to controlling a particle size D"³₅₀ of a third spray dried material.

In the present disclosure, unless otherwise specified, the inert atmosphere includes, but is not limited to, a nitrogen atmosphere, a helium atmosphere, an argon atmosphere, etc.

In some embodiments of the present disclosure, preferably, based on element, the Mn source, the Fe source, the M source, the phosphorus source, and the Li source satisfy: n(Mn):n(Fe):n(M):n(P):n(Li), where 0≤n(Mn)≤1, 0≤n(Fe)≤1, 0≤n(M)≤0.2, 1≤n(P)≤1.1, and 0.95≤n(Li)≤1.1; and preferably, 0≤n(Mn)≤0.7, 0.3≤n(Fe)≤1, 0.1≤n(M)≤0.2, 1≤n(P)≤1.05, and 1≤n(Li)≤1.05.

In some embodiments of the present disclosure, preferably, the M source is selected from compounds containing at least one of Ti, Mg, V, W, Nb, La, Cr, Mo, Ca, Zn, Y, Zr, Sm, Co, Ni, B, Cu, and Gd; and further preferably, compounds containing at least one of Ti, W, Co, V, and Mg.

In some embodiments of the present disclosure, preferably, the Li source is selected from at least one of lithium dihydrogen phosphate, lithium carbonate, lithium oxalate, lithium oxide, lithium powder, and lithium phosphate.

In some embodiments of the present disclosure, preferably, the phosphorus source is selected from at least one of lithium dihydrogen phosphate, ferromanganese phosphate monohydrate, iron phosphate, and phosphorus pentoxide.

In some embodiments of the present disclosure, preferably, an amount of the added organic carbon source satisfies that a content of the carbon coating layer in the cathode material ranges from 0.8 wt % to 3 wt %, and preferably, from 1 wt % to 2.5 wt %. In the present disclosure, the amount of the added organic carbon source accounts for 5 wt % to 40 wt% of a solid content in the mixed slurry, and can be adjusted based on types of different organic carbon sources and a residual carbon rate, to enable the content of the carbon coating layer in the cathode material to satisfy 0.8 wt % to 3 wt%, and preferably, 1 wt % to 2.5 wt%.

In some embodiments of the present disclosure, preferably, the organic carbon source is selected from at least one of glucose, sucrose, starch, polyethylene glycol, polyvinylpyrrolidone, tannic acid, and polydopamine, and further preferably, the organic carbon source is selected from at least one of glucose, sucrose, and starch, and the organic carbon source is selected from at least one of polyethylene glycol, polyvinylpyrrolidone, tannic acid, and polydopamine. In the present disclosure, polyethylene glycol has a weight average molecular weight ranging from 1,500 g/mol to 6,000 g/mol, polyvinylpyrrolidone has a weight average molecular weight ranging from 10,000 g/mol to 40,000 g/mol, and polydopamine has a weight average molecular weight ranging from 400 g/mol to 2,000 g/mol.

In the present disclosure, by adopting the specific types of the organic carbon source as mentioned above, inorganic carbon formed after the sintering of the organic carbon source is uniformly coated on a surface of the matrix having Formula I.

In the present disclosure, a usage amount of the water can be selected from a wide range, as long as the solid content of the mixed slurry ranges from 30 wt% to 50 wt%, and preferably, from 35 wt% to 45 wt%.

In some embodiments of the present disclosure, preferably, based on metallic elements, the Mn source and the Fe source are each independently selected from at least one of single element, oxide, carbonate, oxalate, and phosphate.

In a specific embodiment of the present disclosure, the Mn source includes, but is not limited to, manganese powder, manganese dioxide, manganese tetraoxide, manganese carbonate, manganese oxalate, manganese phosphate, ferromanganese phosphate, ferromanganese phosphate monohydrate, ferromanganese carbonate, ferromanganese oxalate, ferromanganese hydroxide, ferromanganese oxide, ferromanganese oxyhydroxide, etc.

In a specific embodiment of the present disclosure, the Fe source includes, but is not limited to, iron powder, ferric oxide, ferrous oxide, ferrous oxalate, iron phosphate, ferromanganese phosphate, ferromanganese phosphate monohydrate, ferromanganese carbonate, ferromanganese oxalate, ferromanganese hydroxide, ferromanganese oxide, ferromanganese oxyhydroxide, etc.

In a first specific embodiment of the present disclosure, preferably, the preparation method includes: step (I-1) of mixing the Mn source, the Fe source, the M source, the phosphorus source, the Li source, a first carbon source, and water, to obtain a first slurry, and sequentially performing first grinding, first spray drying, and first sintering on the obtained first slurry, to obtain a first sintered product; and step (I-2) of mixing the first sintered product and a second carbon source in water, to obtain a second slurry, and sequentially performing second grinding, second spray drying, and second sintering on the obtained second slurry, to obtain a second sintered product as the cathode material.

The organic carbon source includes the first carbon source and the second carbon source; a particle size D²₅₀ of said second grinding is controlled to satisfy: 0.1 µm≤D²₅₀≤0.48 µm, and preferably, 0.15 µm≤D250≤0.36 µm; and said first sintering and said second sintering are each independently performed in an inert atmosphere.

In some embodiments of the present disclosure, preferably, in the step (I-1), a mass ratio of the first carbon source to the second carbon source is (0.1 to 1):1, for example, 0.1:1, 0.15:1, 0.2:1, 0.3:1, 0.4:1, 0.5:1, 0.6:1, 0.8:1, 1:1, or any value within a range defined by any two of these values, and preferably, (0.15 to 0.8):1. In the present disclosure, the mass ratio falling within the above-mentioned range can effectively reduce the specific surface area of the cathode material and increase the pallet density of the cathode material, and the cathode material has a better graphitization degree.

In some embodiments of the present disclosure, preferably, the first carbon source is selected from at least one of glucose, sucrose, starch, and polyethylene glycol; and the second carbon source is selected from at least one of glucose, sucrose, and starch, and selected from at least one of polyethylene glycol, polyvinylpyrrolidone, tannic acid, and polydopamine.

In the present disclosure, the first grinding aims to grind particles in the first slurry with a solid content of 30 wt% to 50wt%. Preferably, the first grinding includes first coarse grinding and first fine grinding. A particle size D'¹₅₀ of the first coarse grinding is controlled to satisfy: 0.3µm≤D'¹₅₀≤10 µm, for example, the particle size D'¹₅₀ is 0.3 µm, 0.5 µm, 1 µm, 2 µm, 3 µm, 4 µm, 5 µm, 8 µm, 10 µm, or any value within a range defined by any two of these values, and preferably, 0.5 µm≤D'¹₅₀≤5 µm. A particle size D¹₅₀ of the first fine grinding is controlled to satisfy: 0.1 µm≤D¹₅₀≤0.5 µm, for example, the particle size D¹₅₀ is 0.1 µm, 0.2 µm, 0.25 µm, 0.3 µm, 0.35 µm, 0.4 µm, 0.5 µm, or any value within a range defined by any two of these values, and preferably, 0.2 µm≤D¹₅₀≤0.4 µm.

In the present disclosure, components can be directly and more evenly mixed by regulating a final particle size of the first grinding (i.e., the particle size D¹₅₀ of the first fine grinding), which is conducive to a purity of a phase of the cathode material. The excessively coarse grinding is not conducive to uniformity of the components, and the excessively fine grinding is difficult to operate and affects sizes of the primary particles after the sintering, thereby affecting the pallet density and cycle stability of the cathode material. At the same time, the uniformity of the carbon source during first carbon replenishment depends on the particle size of the first grinding, which may thus affect a carbon distribution on surfaces of the particles during the first sintering.

In some embodiments of the present disclosure, preferably, a particle size D"¹₅₀ of the first spray drying is controlled to satisfy: 2 µm≤D"¹₅₀≤30 µm, for example, the particle size D"¹₅₀ is 2 µm, 5 µm, 8 µm, 10 µm, 12 µm, 15 µm, 18 µm, 20 µm, 30 µm, or any value within a range defined by any two of these values, and preferably, 5 µm≤D"¹₅₀≤20 µm. In the present disclosure, during the first spray drying, the first carbon source can effectively coat a surface of a spray material as water in the first slurry evaporates. The excessively large particle size of the spray material affects the evaporation of the water in the particles, thereby affecting the uniform coating of the organic carbon source on the surface of the spray material.

In some embodiments of the present disclosure, preferably, conditions of the first sintering comprise: a temperature T1 ranging from 350°C to 650°C, and preferably, from 400°C to 600°C; a temperature rinsing rate V1 ranging from 0.5 °C/min to 10 °C/min, and preferably, from 1 °C/min to 5 °C/min; and a thermostatic duration t1 ranging from 0.5 hour to 6 hours, and preferably, from 1 hour to 3 hours.

In the present disclosure, unless otherwise specified, a first sintered material obtained by the first sintering is an agglomerate, and an average particle size of the first sintered material depends on the particle size D"¹₅₀ of the first spray dried material. Preferably, a primary particle size of the first sintered material ranges from 40 nm to 240 nm, and preferably, from 60 nm to 180 nm.

In some embodiments of the present disclosure, in the step (I-2), a particle size D²₅₀ of the second grinding is controlled to satisfy: 0.1 µm≤D²₅₀≤0.48 µm, for example, the particle size D²₅₀ is 0.1 µm, 0.15 µm, 0.2 µm, 0.25 µm, 0.3 µm, 0.36 µm, 0.4 µm, 0.48 µm, or any value within a range defined by any two of these values, and preferably, 0.15 µm≤D²₅₀≤0.36 µm. In the present disclosure, the second carbon coating can be effectively formed on the surface of the primary particles by controlling the particle size D²₅₀ of the second grinding range within the above-mentioned range, thereby having the specific I(A)/I(C) and I(A)/I(B).

In some embodiments of the present disclosure, preferably, a particle size D"²₅₀ of the second spray drying is controlled to satisfy: 2 µm≤D"²₅₀≤30 µm, for example, the particle size D"²₅₀ is 2 µm, 5 µm, 8 µm, 10 µm, 12 µm, 15 µm, 18 µm, 20 µm, 30 µm, or any value within a range defined by any two of these values, and preferably, from 5 µm≤D"²₅₀≤20 µm. The excessively small particle size of the second spray drying is unconducive to improving production efficiency, and the excessively large particle size of the second spray drying is unconducive to volatilization of the water, thereby affecting uniform attachment of the second carbon source.

In some embodiments of the present disclosure, preferably, conditions of the second sintering includes: a temperature T2 ranging from 550°C to 850°C, and preferably, from 600°C to 750°C; a temperature rinsing rate V2 ranging from 0.5 °C/min to 50 °C/min, and preferably, from 0.8 °C/min to 5 °C/min; and a thermostatic duration t2 ranging from 2 hours to 14 hours, and preferably, from 6 hours to 12 hours.

In the present disclosure, when the temperature T2 for the second sintering is relatively low, the graphitization degree of the carbon coating layer of the cathode material is reduced with an increased in the carbon content, and [I(A)/I(C)] and [I(A)/I(B)] are correspondingly reduced, leading to an increased specific surface area, a reduced pallet, and an increased impedance. In this way, the electrochemical performances are affected to a certain extent. The excessively high temperature T2 for the second sintering may cause abnormal growth of the primary particles of the cathode material, while generating impurity phases such as Fe₂P, thereby affecting the electrochemical performances of the cathode material.

In a second specific embodiment of the present disclosure, preferably, the preparation method includes: step (II) of mixing the Mn source, the Fe source, the M source, the phosphorus source, the Li source, the organic carbon source, and water, to obtain a third slurry, and sequentially performing third grinding, third spray drying, and third sintering on the obtained third slurry, to obtain a third sintered product. A particle size D³₅₀ of said third grinding is controlled to satisfy: 0.1 µm≤D³₅₀≤0.48 µm, and preferably, 0.15 µm≤D³₅₀≤0.36 µm; and said third sintering is performed in the inert atmosphere.

When the matrix represented by Formula I contains both Mn and Fe, the Mn source and the Fe source are each independently selected from compounds containing both Mn and Fe; or when the matrix represented by Formula I does not contain both Mn and Fe at the same time, the Mn source is selected from manganese phosphate, and the Fe source is selected from iron phosphate.

In the present disclosure, based on the comparison between the above two preparation methods, when using the first preparation method, i.e., the technical means of the twice grinding, the twice spray drying, and the twice sintering, the types of the Mn source and the Fe source in raw materials are not limited, that is, the first preparation method is applicable to all kinds of Mn sources and Fe sources defined above; and when using the second preparation method, i.e., the technical means of the single grinding, the single spray drying, and the single sintering, the Mn source and the Fe source in the raw materials are limited to specific types.

At the same time, for specific Mn source and Fe source as raw materials, instead of the technical means of the twice grinding, the twice spray drying, and the twice sintering, the technical means of the single grinding, the single spray drying, and the single sintering can be used to obtain a specific olivine-type cathode material, while simplifying the process flow and saving the costs.

In the present disclosure, unless otherwise specified, when the matrix represented by Formula I contains both Mn and Fe, it means that in Formula I, subscripts (1-x) and x for Mn and Fe are not equal to 0, respectively; the expression "the Mn source and the Fe source are each independently selected from the compounds containing both Mn and Fe" means that the Mn source is selected from compounds containing Mn and Fe as well as the Fe source is also selected from compounds containing Mn and Fe; and when the matrix represented by Formula I does not contain both Mn and Fe at the same time, it means that in Formula I, the subscript (1-x) of Mn is equal to 0 and the subscript x of Fe is not equal to 0; or the subscript (1-x) of Mn is not equal to 0 and the subscript x of Fe is equal to 0.

In some embodiments of the present disclosure, when the matrix represented by Formula I contains both Mn and Fe, the Mn source and the Fe source are each independently selected from compounds containing both Mn and Fe. Preferably, the Mn source and the Fe source are each independently selected from at least one of ferromanganese phosphate, ferromanganese phosphate monohydrate, ferromanganese carbonate, ferromanganese oxalate, ferromanganese hydroxide, ferromanganese oxide, and ferromanganese oxyhydroxide.

In some embodiments of the present disclosure, when the matrix represented by Formula I does not contain both Mn and Fe at the same time, the Mn source is selected from manganese phosphate, and the Fe source is selected from iron phosphate.

In some embodiments of the present disclosure, preferably, in the step (II), the third grinding includes third coarse grinding and third fine grinding. A particle size D'³₅₀ of the third coarse grinding is controlled to satisfy: 0.3 µm≤D'³₅₀≤10 µm, for example, the particle size D'³₅₀ is 0.3 µm, 0.5 µm, 1 µm, 1.5 µm, 2 µm, 3 µm, 4 µm, 5 µm, 8 µm, 10 µm, or any value within a range defined by any two of these values, and preferably, 0.5 µm≤D³₅₀≤5 µm; and a particle size D³₅₀ of the third fine grinding is controlled to satisfy: 0.1 µm≤D³₅₀≤0.48 µm, for example, the particle size D³₅₀ is 0.1 µm, 0.15 µm, 0.2 µm, 0.25 µm, 0.3 µm, 0.36 µm, 0.4 µm, 0.48 µm, or any value within a range defined by any two of these values, and preferably, 0.15 µm≤D³₅₀≤0.36 µm. In the present disclosure, the particle sizes satisfying the above-mentioned ranges enable carbon to be uniformly coated on the surface of the cathode material, and enable the cathode material to have specific averages of [I(A)/I(C)] and [I(A)/I(B)].

In some embodiments of the present disclosure, preferably, a particle size D"³₅₀ of the third spray drying is controlled to satisfy: 2 µm≤D"³₅₀≤30 µm, for example, the particle size D"³₅₀ is 2 µm, 5 µm, 8 µm, 10 µm, 12 µm, 15 µm, 18 µm, 20 µm, 30 µm, or any value within a range defined by any two of these values, and preferably, 5 µm≤D"³₅₀≤20 µm.

In some embodiments of the present disclosure, preferably, conditions of the third sintering include: a temperature T3 ranging from 550°C to 850°C, and preferably, from 600°C to 750°C; a temperature rising rate V3 ranging from 0.5 °C/min to 50 °C/min, and preferably, from 0.8 °C/min to 5 °C/min; and a thermostatic duration t3 ranging from 2 hours to 14 hours, and preferably, from 6 hours to 12 hours.

In the present disclosure, when the temperature T3 for the third sintering is relatively low, the graphitization degree of the carbon coating layer of the cathode material decreases, and the carbon content increases. Correspondingly, and the averages of [I(A)/I(C)] and [I(A)/I(B)] decrease. In this case, the BET surface area increases, the compaction degree decreases, and the impedance increases, which affect the electrochemical performances to a certain extent When the temperature T3 for the third sintering is relatively high, the content of the carbon coating layer of the cathode material decreases, the average of [I(B)/I(C)] decreases, the graphitization degree increases, and the primary particles grow, thereby improving the compaction of the material and reducing the specific surface area. In this way, the electrochemical performances and processing performance can be advantageously enhanced.

A third aspect of the present disclosure provides a lithium-ion battery. The lithium-ion battery includes the cathode material according to the first aspect of the present disclosure, or a cathode material prepared by the method according to the second aspect of the present disclosure.

The present disclosure will be described in detail by examples below.

Physical parameters of cathode materials prepared in examples and comparative examples are listed in Table 1.

### Method for testing energy retention rate in the 80-th cycle

(1) Assembling of battery: a to-be-tested cathode material, an electrically conductive agent (acetylene black), and a binder (polyvinylidene fluoride (PVDF)) in a mass ratio of 95:3:2 were mixed with a solvent (N-methylphthalimide (NMP)) (at a temperature of 25°C, with a rotational speed of 1,000 rpm, and for a duration of 40 minutes), to obtain a cathode slurry with a solid content of 40 wt%.

The above-mentioned cathode slurry was applied on a surface of an aluminum foil to coat the cathode slurry coating on a surface of the aluminum foil. After dying at a temperature of 135°C, a roller press was used for rolling (at a pressure of 15 T) to provide a cathode active material layer on the surface of the aluminum foil, to obtain a positive electrode plate.

In an argon-filled glove box, in which a water content and an oxygen content were both lower than 5 ppm, the above-mentioned positive electrode plate, a separator, a negative electrode plate, and electrolyte were assembled into a button battery of 2025 type, which was left to stand for 6 hours. A lithium plate having a diameter of 16 mm and a thickness of 0.5 mm was used as the negative electrode plate. A polyethylene porous film (Celgard 2325) having a thickness of 25 µm was used as the separator. The electrolyte was a mixture of equal amounts of ethylene carbonate (EC) and diethyl ethyl carbonate (DEC) containing LiPF₆ (1 mol/L).

(2) Testing conditions: a charge and discharge voltage was controlled to range from 2.5 V to 4.35 V. At a temperature of 25°C, the button battery was charged and discharged for two cycles at 0.1C, and then charged and discharged for 80 cycles at 1C. The first discharge specific capacity at 0.1C was recorded as a discharge specific capacity of the button battery in the 1-st cycle, and the eightieth discharge specific capacity at 1C was recorded as a discharge specific capacity of the button battery in the 80-th cycle.

The energy retention rate in the 80-th cycle =(the discharge specific capacity of the button battery in the 80-th cycle/the discharge specific capacity of the button battery in the 1-st cycle)×100%.

### Example 1

(1) A manganese source (manganese tetraoxide), an iron source (iron phosphate), a lithium source (lithium dihydrogen phosphate, lithium carbonate), a phosphorus source (lithium dihydrogen phosphate, iron phosphate), an M source (titanium dioxide, tungsten oxide), and a first carbon source (glucose) were mixed in water, to obtain a first slurry with a solid content of 40 wt%. These sources were added based on that the mole of elements satisfied chemical formula Li_{1.04}Mn_{0.65}Fe_{0.35}Ti_{0.05}W_{0.05}(PO₄)_{1.01}. The above-mentioned first slurry was subjected to first coarse grinding, to obtain a first coarsely ground material, which had a particle size D'¹₅₀ of 3.3 µm. The above-mentioned first slurry was subjected to first fine grinding to obtain a finely ground material, which had a particle size D¹₅₀ of 0.3µm. The above-mentioned finely ground material was subjected to first spray drying to obtain a first spray dried material, which had a particle size D"¹₅₀ of 10.2 µm and a BET of 7.2 m²/g. The above-mentioned first spray dried material was subjected to first sintering in a nitrogen atmosphere, in which the temperature was increased to a temperature T1 of 500°C at a temperature rising rate V1 of 1.5 °C/min and a thermostatic duration t1 was 3 hours, to obtain a first sintered material, which had an average particle size of 10.5 µm, a primary particle size of 80 nm, and a specific surface area of 7.3 m²/g.
(2) The above-mentioned first sintered material was dispersed in water and added with a second carbon source (a mass ratio of glucose to PEG was 5.6:4), to obtain a second slurry. A mass ratio of the first carbon source to the second carbon source was 0.45:1. The above-mentioned first carbon source and second carbon source were added in a total amount satisfying: a content of a carbon coating layer in a finished cathode material was 1.57 wt%. The above-mentioned second slurry was subjected to second grinding to obtain a second ground material, which had a particle size D²₅₀ of 0.25µm. The above-mentioned second ground material was subjected to second spray drying to obtain a second spray dried material, which had a particle size D"²₅₀ of 8.0µm and a BET of 8.8 m²/g. The above-mentioned second spray dried material was subjected to second sintering, in which the temperature was increased to a temperature T2 of 675°C at a temperature rising rate V2 of 1.5 °C/min and a thermostatic duration t2 was 10 hours, to obtain a second sintered material, which was crushed to obtain an olivine-type cathode material S1.

A Raman spectrum of the cathode material S1 was shown in FIG. 1. It can be seen from FIG. 1, the cathode material S1 had peaks A, B, and C near Raman shifts of 950 cm⁻¹, 1350 cm⁻¹, and 1580 cm⁻¹, respectively, and the peaks A, B, and C corresponded to characteristic peaks of PO₄³⁻, carbon D, and carbon G in a matrix, respectively.

### Example 2

Example 2 was based on the method of Example 1. Example 2 differed from Example 1 in step (2). In step (2), the mass ratio of glucose to PEG in the second carbon source was 7:4; the mass ratio of the above-mentioned first carbon source to the above-mentioned second carbon source was 0.39:1, and the above-mentioned first carbon source and second carbon source were added in an amount satisfying: the content of the carbon coating layer in the finished cathode material was 1.85 wt%; the second ground material with a particle size D²₅₀ of 0.25 µm was obtained; the above-mentioned second ground material was subjected to second spray drying to obtain the second spray dried material, which had a particle size D"²₅₀ of 8.3 µm and a BET of 9.1 m²/g. The other conditions were the same as those in Example 1. A cathode material S2 was obtained.

### Example 3

Example 3 was based on the method of Example 1. Example 3 differed from Example 1 in step (2). In step (2), the mass ratio of glucose to PEG in the second carbon source was 2.5:12; the mass ratio of the above-mentioned first carbon source to the above-mentioned second carbon source was 0.3:1, the above-mentioned first carbon source and second carbon source were added in a total amount satisfying: the content of the carbon coating layer in a finished cathode material was 1.55 wt%; the second ground material with a particle size D²₅₀ of 0.25 µm was obtained; the above-mentioned second ground material was subjected to second spray drying to obtain the second spray dried material, which had a particle size D"²₅₀ of 8.8 µm and a surface area of 8.5 m²/g. The other conditions were the same as those in Example 1. A cathode material S3 was obtained.

### Example 4

A manganese source (ferromanganese phosphate monohydrate), an iron source (ferromanganese phosphate monohydrate), a lithium source (lithium dihydrogen phosphate, lithium carbonate), a phosphorus source (lithium dihydrogen phosphate, ferromanganese phosphate monohydrate), a M source (titanium dioxide, tungsten oxide), and an organic carbon source (glucose, PEG) were mixed in water to obtain a third slurry with a solid content of 40 wt%. These sources were added based on that the mole of elements satisfied chemical formula represented as Li_{1.04}Mn_{0.65}Fe_{0.35}Ti_{0.05}W_{0.05}(PO₄)_{1.01}. The above-mentioned organic carbon source was added in an amount satisfying: a content of a carbon coating layer in a finished cathode material was 1.83 wt%. The above-mentioned third slurry was subjected to third coarse grinding to obtain a third coarsely ground material, which had a particle size D'³₅₀ of 2 µm. The above-mentioned third coarsely ground material was subjected to third fine grinding to obtain a third finely ground material, which had a particle size D³₅₀ of 0.3 µm. The above-mentioned third finely ground material was subjected to third spray drying to obtain a third spray dried material, which had a particle size D"³₅₀ of 10.8 µm and a BET of 30.1 µm. The above-mentioned third spray dried material was subjected to third sintering, in which the temperature was increased to a temperature T3 of 650°C at a temperature rising rate V3 of 1.5 °C/min and a thermostatic duration t3 was 10 hours, to obtain a third sintered material, which was crushed to obtain an olivine-type cathode material S4.

### Example 5

An iron source (iron phosphate), a lithium source (lithium carbonate), a phosphorus source (iron phosphate), a M source (titanium dioxide, tungsten oxide), and an organic carbon source (glucose, PEG) were mixed in water to obtain a third slurry with a solid content of 45 wt%. These sources were added based on that the mole of elements satisfied chemical formula represented by Li_{1.04}FeTi_{0.05}W_{0.05}(PO₄)_{1.03}. The above-mentioned organic carbon source was added in an amount satisfying: a content of a carbon coating layer in a finished cathode material was 1.40 wt%. The above-mentioned third slurry was subjected to third coarse grinding to obtain a third coarsely ground material, which had a particle size D'³₅₀ of 2.8 µm. The above-mentioned third coarsely ground material was subjected to third fine grinding to obtain a third finely ground material, which had a particle size D'³₅₀ of 0.35 µm. The above-mentioned third finely ground material was subjected to third spray drying to obtain a third spray dried material, which had a particle size D"³₅₀ of 12.1 µm and a BET of 6.1 m²/g. The above-mentioned third spray dried material was subjected to third sintering, in which the temperature was increased to a temperature T3 of 780°C at a temperature rising rate V3 of 3 °C/min and a thermostatic duration t3 was 8 hours, to obtain a third sintered material, which was crushed to obtain an olivine-type cathode material S5.

### Example 6

Example 6 was based on the method of Example 1. Example 6 differed from Example 1 in step (2). In step (2), the temperature T2 of 675°C for the second sintering was replaced with 650°C. The other conditions were the same as those in Example 1. An olivine-type cathode material S6 was obtained.

### Example 7

Example 7 was based on the method of Example 1. Example 7 differed from Example 1 in step (2). In step (2), the mass ratio of the above-mentioned first carbon source to the above-mentioned second carbon source was 0.67:1, and the above-mentioned first carbon source and second carbon source were added in a total amount satisfying: the content of the carbon coating layer in a finished cathode material was 1.67 wt%. The other conditions were the same as those in Example 1. An olivine-type cathode material S7 was obtained.

### Comparative Example 1

Comparative Example 1 was based on the method of Example 4. Comparative Example 1 differed from Example 4 in that the particle size D³₅₀ of the third finely ground material was controlled to be 0.5 µm. The other conditions were the same as those in Example 4. An olivine-type cathode material DS1 was obtained.

### Comparative Example 2

Comparative Example 2 was based on the method of Example 1. Comparative Example 2 differed from Example 1 in step (2). In step (2), the particle size D²₅₀ of the second ground material was adjusted to be 0.5 µm. The other conditions were the same as those in Example 1. An olivine-type cathode material DS2 was obtained.

**[Table 1]**

| | Matrix | Carbon coating layer | |
|---|---|---|---|
| | | Thickness, nm | Content, wt% |
| Example 1 | Li_{1.04}Mn_{0.65}Fe_{0.33}Ti_{0.05}W_{0.05}(PO₄)_{1.01} | 2.5-5 | 1.57 |
| Example 2 | Same as Example 1 | 2-5 | 1.85 |
| Example 3 | Same as Example 1 | 3-4 | 1.55 |
| Example 4 | Same as Example 1 | 2-5 | 1.83 |
| Example 5 | Li_{1.04}FeTi_{0.05}W_{0.05}(PO₄)_{1.03} | 2-5 | 1.40 |
| Example 6 | Same as Example 1 | 3-5 | 1.61 |
| Example 7 | Same as Example 1 | 3-5 | 1.67 |
| Comparative Example 1 | Same as Example 1 | 0.9-12 | 1.42 |
| Comparative Example 2 | Same as Example 1 | 0.8-20 | 1.43 |

**[Table 1 continued]**

| | Laser intensity, mW | [I(A)/I(C)] | | [I(A)/I(B)] | | Average of [I(B)/I(C)] |
|---|---|---|---|---|---|---|
| | | Average | Standard deviation | Average | Standard deviation | |
| Example 1 | 0.1 | 0.12 | 0.02 | 0.13 | 0.02 | 0.77 |
| Example 2 | 0.1 | 0.11 | 0.01 | 0.12 | 0.01 | 0.77 |
| Example 3 | 0.1 | 0.15 | 0.01 | 0.21 | 0.01 | 0.75 |
| Example 4 | 0.1 | 0.11 | 0.01 | 0.12 | 0.02 | 0.77 |
| Example 5 | 0.1 | 0.23 | 0.01 | 0.25 | 0.01 | 0.74 |
| Example 6 | 0.1 | 0.09 | 0.01 | 0.09 | 0.01 | 0.81 |
| Example 7 | 0.1 | 0.05 | 0.02 | 0.06 | 0.02 | 0.77 |
| Comparative Example 1 | 0.1 | 0.33 | 0.14 | 0.33 | 0.12 | 0.74 |
| Comparative Example 2 | 0.1 | 0.40 | 0.15 | 0.41 | 0.16 | 0.75 |

**[Table 1 continued]**

| | Cathode material | | | | Energy retention rate at 80^{th} cycle, % |
|---|---|---|---|---|---|
| | Average particle diameter, nm | BET surface area, m²/g | Volume resistivity, Ω·cm | Pallet density, g/m³ | |
| Example 1 | 131 | 19.6 | 53 | 2.25 | 99.38 |
| Example 2 | 108 | 21.3 | 41 | 2.21 | 99.51 |
| Example 3 | 142 | 15.6 | 43 | 2.34 | 99.29 |
| Example 4 | 102 | 20.1 | 76 | 2.20 | 98.81 |
| Example 5 | 221 | 10.9 | 17 | 2.46 | 99.96 |
| Example 6 | 125 | 19.6 | 168 | 2.15 | 98.13 |
| Example 7 | 135 | 22.3 | 139 | 2.03 | 96.13 |
| Comparative Example 1 | 311 | 10.5 | 110 | 2.50 | 91.27 |
| Comparative Example 2 | 321 | 11.2 | 273 | 2.42 | 85.32 |

The data in Table 1 indicate that, based on Examples 1 to 7 and Comparative Examples 1 and 2, the content and coating effect of the carbon coating layer can be affected to a certain extent when varying the preparation process, the sintering temperature, the grinding particle size, and types of organic carbon source for the olivine-type cathode material.

Based on the comparison between Example 1 and Example 2, when the content of the carbon coating layer of the cathode material was increased, the averages of [I(A)/I(C)] and [I(A)/I(B)] both decreased, i.e., having an inverse relation with the thickness of the carbon coating layer; when the averages of [I(B)/I(C)] were the same, the graphitization degree of the organic carbon source was more related to the temperature; and when the carbon coating layer was uniformly coated, the content and thickness of the carbon coating layer were in a positive correlation.

Based on the comparison between Example 1 and Example 3, by adjusting the added amount of the second carbon source to regulate the mass ratio of the first carbon source to the second carbon source under the same sintering temperature and the same content of the carbon coating layer, the specific surface area of the cathode material was reduced, the pallet density was increased, and the graphitization degree was better.

The cathode material S3 obtained in Example 3 was tested at two laser intensities of 0.1 mW and 0.3 mW, respectively. At the laser intensity of 0.3 mW, the average and standard deviation of [I(A)/I(C)] were 0.31 and 0.03, respectively, the average and standard deviation of [I(A)/I(B)] were 0.38 and 0.03, respectively, and the average of [I(B)/I(C)] was 0.81. That is, compared with the laser intensity of 0.1 mW, the averages and standard deviations of [I(A)/I(C)] and [I(A)/I(B)] increased at the laser intensity of 0.3 mW. During the testing, the carbon coating layer on the surface of the sample was damaged to a certain extent, and thus the carbon coating layer became uneven and thinner, leading to an intensified signal A and a greater standard deviation. Therefore, the specific laser intensity is necessarily limited for characterizing this feature of the material.

Based on the comparison between Example 2 and Example 4, when the cathode materials with the same olivine-type structure were prepared through different processes, the averages of [I(A)/I(C)] and [I(A)/I(B)] showed a similar pattern, indicating that the preparation of the cathode material can be effectively guided by such a pattern under different preparation processes.

Based on the comparison between Example 4 and Example 5, when the two different cathode materials were prepared though the similar processes, certain differences existed in the averages of [I(A)/I(C)] and [I(A)/I(B)] due to the differences in the sintering temperature, carbon loading, and grinding particle size. Therefore, such a pattern should guide the preparation of the same material.

Based on the comparison between comparing Example 1 and Example 6, with a decrease in the second sintering temperature, the graphitization degree of the carbon coating layer of the cathode material was reduced, the content of the carbon coating layer was increased, and the averages of [I(A)/I(C)] and [I(A)/I(B)] were correspondingly reduced, the BET was increased, the compaction degree was reduced, and the impedance was increased, which affected the electrochemical performances to a certain extent.

Based on the comparison between Example 1 and Example 7, in the second sintering process, when the carbon combination was changed, the content of residual carbon in the first sintering increased, and the uneven coating of the inorganic carbon during the second grinding affected the quality of the carbon coating layer on the surface of the cathode material, resulting in abnormal averages and standard deviations of [I(A)/I(C)] and [I(A)/I(B)].

Based on the comparison between Example 4 and Comparative Example 1, as well as Based on the comparison between Example 1 and Comparative Example 2, the increased grinding particle size was unconducive to the uniform carbon coating on the primary particles of the cathode material during the sintering, and some primary particles were exposed, resulting in the intensified signal A as well as abnormal averages and standard deviations of [I(A)/I(C)] and [I(A)/I(B)].

The preferred embodiments of the present disclosure are described in detail above. However, the present disclosure is not limited thereto. Without departing from the scope of the technical concept of the present disclosure, various simple modifications can be made to the technical solutions of the present disclosure, including the combination of various technical features in any other suitable manner. These simple modifications and combinations should also be regarded as the disclosed content of the present disclosure and fall within the protection scope of the present disclosure.

## Claims

1. An olivine-type cathode material, comprising:
a matrix; and
a carbon coating layer, wherein:
in a Raman spectrum, the cathode material has Raman responses in wavenumber regions of 940 cm⁻¹ to 950 cm⁻¹, 1330 cm⁻¹ to 1350 cm⁻¹, and 1580 cm⁻¹ to 1610 cm⁻¹, corresponding to three characteristic peaks A, B, and C, respectively; and
the cathode material satisfies: 0.01≤an average of [I(A)/I(C)]≤0.3 and 0.01≤an average of [I(A)/I(B)]≤0.3.

2. The cathode material according to claim 1, wherein:
the cathode material satisfies: 0.05≤the average of [I(A)/I(C)]≤0.25 and 0.05≤the average of [I(A)/I(B)]≤0.25, and more preferably, the cathode material satisfies: 0.1≤the average of [I(A)/I(C)]≤0.25 and 0.1≤the average of [I(A)/I(B)]≤0.25; and/or
the cathode material further satisfies: a standard deviation of [I(A)/I(C)]≤0.02; and/or
the cathode material further satisfies: a standard deviation of [I(A)/I(B)]≤0.02; and/or
the cathode material further satisfies: an average of [I(B)/I(C)]≤1, and preferably, the average of [I(B)/I(C)]≤0.9.

3. The cathode material according to claim 1 or 2, wherein the matrix has a composition represented by Formula I:
LiₐMn₁₋ₓFeₓM_{b}(PO₄)_{c} (I),
where M is selected from at least one of Ti, Mg, V, W, Nb, La, Cr, Mo, Ca, Zn, Y, Zr, Sm, Co, Ni, B, Cu, and Gd; 0.95≤a≤1.1; 0≤x≤1; 0≤b≤0.2; and 1≤c≤1.1; and
preferably, in Formula I, M is selected from at least one of Ti, W, Co, V and Mg; 1≤a≤1.05; 0.3≤x≤1; 0.1≤b≤0.2; and 1≤c≤1.05.

4. The cathode material according to any one of claims 1 to 3, wherein:
based on a total weight of the cathode material, a content of the carbon coating layer ranges from 0.8 wt % to 3 wt %, and preferably, from 1 wt % to 2.5 wt %; and/or
a thickness of the carbon coating layer ranges from 1 nm to 10 nm, and preferably, from 1.5 nm to 5 nm; and/or
an average particle size of the matrix ranges from 40 nm to 290 nm, and preferably, from 70 nm to 230 nm; and/or
an average particle size of the cathode material ranges from 50 nm to 300 nm, and preferably, from 80 nm to 240 nm.

5. The cathode material according to any one of claims 1 to 4, wherein:
a Brunauer-Emmett-Teller (BET) surface area of the cathode material ranges from 5 m²/g to 40 m²/g, and preferably, from 8 m²/g to 25 m²/g; and/or
a volume resistivity of the cathode material ranges from 0 Ω·cm to 200 Ω·cm, and preferably, from 0 Ω·cm to 100 Ω·cm; and/or
a pallet density of the cathode material ranges from 2 g/m³ to 2.7 g/m³, and preferably, 2.2 g/m³ to 2.6 g/m³.

6. A method for preparing the olivine-type cathode material according to any one of claims 1 to 5, the method comprising:
mixing a Mn source, a Fe source, a M source, a phosphorus source, a Li source, an organic carbon source, and water, to obtain a mixed slurry; and
sequentially performing grinding, spray drying, and sintering on the obtained mixed slurry to load a carbon coating layer on a surface of the matrix, to obtain the cathode material, the matrix having a composition represented by Formula I:
LiₐMn₁₋ₓFeₓM_{b}(PO₄)_{c} (I),
where M is selected from at least one of Ti, Mg, V, W, Nb, La, Cr, Mo, Ca, Zn, Y, Zr, Sm, Co, Ni, B, Cu, and Gd; 0.95≤a≤1.1;0≤x≤1; 0≤b≤0.2; and 1≤c≤1.1;
wherein said sintering is performed in an inert atmosphere; and
wherein a particle size D₅₀ of said grinding is controlled to satisfy: 0.1 µm≤D₅₀≤0.48 µm, and preferably, 0.15 µm≤D₅₀≤0.36 µm.

7. The method according to claim 6, wherein usage amounts, based on element, of the Mn source, the Fe source, the M source, the phosphorus source, and the Li source satisfy: n(Mn):n(Fe):n(M):n(P):n(Li), where 0≤n(Mn)≤1, 0≤n(Fe)≤1, 0≤n(M)≤0.2, 1≤n(P)≤1.1, and 0.95≤n(Li)≤1.1; and preferably, 0≤n(Mn)≤0.7, 0.3≤n(Fe)≤1, 0.1≤n(M)≤0.2, 1≤n(P)≤1.05, and 1≤n(Li)≤1.05; and/or
the M source is selected from compounds containing at least one of Ti, Mg, V, W, Nb, La, Cr, Mo, Ca, Zn, Y, Zr, Sm, Co, Ni, B, Cu, and Gd, and preferably, from compounds containing at least one of Ti, W, Co, V, and Mg; and/or
the Li source is selected from at least one of lithium dihydrogen phosphate, lithium carbonate, lithium oxalate, lithium oxide, lithium powder, and lithium phosphate; and/or
the phosphorus source is selected from at least one of lithium dihydrogen phosphate, ferromanganese phosphate monohydrate, iron phosphate, phosphorus pentoxide, and phosphoric acid; and/or
the organic carbon source is added in an amount satisfying that a content of the carbon coating layer in the cathode material ranges from 0.8 wt % to 3 wt %, and preferably, from 1 wt % to 2.5 wt %; and/or
the organic carbon source is selected from at least one of glucose, sucrose, starch, polyethylene glycol, polyvinylpyrrolidone, tannic acid, and polydopamine, and more preferably, from at least one of glucose, sucrose, and starch, and from at least one of polyethylene glycol, polyvinylpyrrolidone, tannic acid, and polydopamine.

8. The method according to claim 6 or 7, wherein based on metallic elements, the Mn source and the Fe source are each independently selected from at least one of single element, oxide, carbonate, oxalate, and phosphate.

9. The method according to any one of claims 6 to 8, comprising:
step (I-1) of mixing the Mn source, the Fe source, the M source, the phosphorus source, the Li source, a first carbon source, and water, to obtain a first slurry, and sequentially performing first grinding, first spray drying, and first sintering on the obtained first slurry, to obtain a first sintered product; and
step (I-2) of mixing the first sintered product and a second carbon source in water, to obtain a second slurry, and sequentially performing second grinding, second spray drying, and second sintering on the obtained second slurry, to obtain a second sintered product as the cathode material, wherein:
the organic carbon source comprises the first carbon source and the second carbon source;
a particle size D²₅₀ of the second grinding is controlled to satisfy: 0.1 µm≤D²₅₀≤0.48 µm, and preferably, 0.15 µm≤D²₅₀≤0.36 µm; and
the first sintering and the second sintering are each independently performed in an inert atmosphere.

10. The method according to claim 9, wherein:
in the step (I-1), a mass ratio of the first carbon source to the second carbon source is (0.1 to 1):1, and preferably, (0.15 to 0.8):1; and/or
the first carbon source is selected from at least one of glucose, sucrose, starch, and polyethylene glycol; and the second carbon source is selected from at least one of glucose, sucrose, and starch, and at least one of polyethylene glycol, polyvinylpyrrolidone, tannic acid, and polydopamine; and/or
the first grinding comprises first coarse grinding and first fine grinding, wherein a particle size D'¹₅₀ of the first coarse grinding is controlled to satisfy: 0.3µm≤D'¹₅₀≤10 µm, and preferably, 0.5 µm≤D'¹₅₀≤5 µm; and wherein a particle size D¹₅₀ of the first fine grinding is controlled to satisfy: 0.1 µm≤D¹₅₀≤0.5 µm, and preferably, 0.2 µm≤D¹₅₀≤0.4 µm; and/or
a particle size D"¹₅₀ of the first spray drying is controlled to satisfy: 2 µm≤D"¹₅₀≤30 µm, and preferably, 5 µm≤D"¹₅₀≤20 µm; and/or
conditions of the first sintering comprise: a temperature T1 ranging from 350°C to 650°C, and preferably, from 400°C to 600°C; a temperature rinsing rate V1 ranging from 0.5 °C/min to 10 °C/min, and preferably, from 1 °C/min to 5 °C/min; a thermostatic duration t1 ranging from 0.5 hour to 6 hours, and preferably, from 1 hour to 3 hour; and/or
in the step (I-2), a particle size D"²₅₀ of the second spray drying is controlled to satisfy: 2 µm≤D"²₅₀≤30 µm, and preferably, from 5 µm≤D"²₅₀≤20 µm; and/or
conditions of the second sintering comprise: a temperature T2 ranging from 550°C to 850°C, and preferably, from 600°C to 750°C; a temperature rinsing rate V2 ranging from 0.5 °C/min to 50 °C/min, and preferably, from 0.8 °C/min to 5 °C/min; and a thermostatic duration t2 ranging from 2 hours to 14 hours, and preferably, from 6 hours to 12 hours.

11. The method according to any one of claims 6 to 8, further comprising:
step (II) of mixing the Mn source, the Fe source, the M source, the phosphorus source, the Li source, the organic carbon source, and water, to obtain a third slurry, and sequentially performing third grinding, third spray drying, and third sintering on the obtained third slurry, to obtain a third sintered product, a particle size D³₅₀ of the third grinding being controlled to satisfy: 0.1 µm≤D³₅₀≤0.48 µm, and preferably, 0.15 µm≤D³₅₀≤0.36 µm, and the third sintering being performed in the inert atmosphere, wherein:
when the matrix represented by Formula I contains both Mn and Fe, the Mn source and the Fe source are each independently selected from compounds containing both Mn and Fe; or
when the matrix represented by Formula I does not contain both Mn and Fe, the Mn source is selected from manganese phosphate, and the Fe source is selected from iron phosphate.

12. The method according to claim 11, wherein in the step (II):
the third grinding comprises third coarse grinding and third fine grinding, wherein a particle size D'³₅₀ of the third coarse grinding is controlled to satisfy: 0.3 µm≤D'³₅₀≤10 µm, and preferably, 0.5 µm≤D'³₅₀≤5 µm, and wherein a particle size D³₅₀ of the third fine grinding is controlled to satisfy: 0.1 µm≤D³₅₀≤0.48 µm, and preferably, 0.15 µm≤D³₅₀≤0.36 µm; and/or
a particle size D"³₅₀ of the third spray drying is controlled to satisfy: 2 µm≤D"³₅₀≤30 µm, and preferably, 5 µm≤D"³₅₀≤20 µm; and/or
conditions of the third sintering comprise: a temperature T3 ranging from 550°C to 850°C, and preferably, from 600°C to 750°C; a temperature rising rate V3 ranging from 0.5 °C/min to 50 °C/min, and preferably, from 0.8 °C/min to 5 °C/min; and a thermostatic duration t3 ranging from 2 hours to 14 hours, and preferably, from 6 hours to 12 hours.

13. A lithium-ion battery, comprising:
the cathode material according to any one of claims 1 to 5; or
a cathode material prepared by the method according to any one of claims 6 to 12.
